(19) **Europäisches Patentamt / European Patent Office / Office européen des brevets**

(11) **EP 2 214 919 B1**

(12) **FASCICULE DE BREVET EUROPEEN**

(45) Date de publication et mention
de la délivrance du brevet:
**23.10.2013 Bulletin 2013/43**

(21) Numéro de dépôt: **08844502.8**

(22) Date de dépôt: **23.10.2008**

(51) Int Cl.:
**B60C 23/04** ^(2006.01)

(86) Numéro de dépôt international:
**PCT/FR2008/051916**

(87) Numéro de publication internationale:
**WO 2009/056741 (07.05.2009 Gazette 2009/19)**

(54) **ENSEMBLE D'UN PNEUMATIQUE ET D'UN ORGANE SOUPLE**

ZUSAMMENBAU VON EINEM REIFEN UND VON EINEM ELASTISCHEM TEIL

TYRE AND FLEXIBLE MEMBER ASSEMBLY

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.10.2007 FR 0758519**

(43) Date de publication de la demande:
**11.08.2010 Bulletin 2010/32**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **BATTOCCHIO, Claudio**
**63200 Riom (FR)**
• **CUBIZOLLE, Bernard**
**63118 Cebazat (FR)**

(74) Mandataire: **Dequire, Philippe Jean-Marie Denis**
**M.F.P. Michelin**
**23, place des Carmes-Déchaux**
**DGD/PI - F35 - Ladoux**
**63040 Clermont-Ferrand Cedex 09 (FR)**

(56) Documents cités:
**EP-A- 1 544 001      WO-A-2004/048132**
**US-A1- 2002 174 925**

EP 2 214 919 B1

**Description**

La présente invention concerne le domaine technique des pneumatiques pour véhicule automobile.

On connaît dans l'état de la technique notamment d'après le document EP-A1-1 544 001, en accord avec le préambule de la revendication 1, un organe en gomme collé a la surface intérieure d'un pneumatique et formant support pour un dispositif électronique tel qu'un capteur de pression ou de température. L'organe en gomme est parfois désigné sous le terme anglais « patch ».

Lors de son utilisation, le pneumatique subit des accélérations et des déformations qui fragilisent la fixation de l'organe au pneumatique. Ainsi, on constate généralement un décollement partiel, voire total, de l'organe en fin de vie du pneumatique.

L'invention a notamment pour but d'éviter ou retarder l'apparition de ce décollement et d'améliorer la tenue de l'organe sur le pneumatique.

A cet effet, l'invention a pour objet un ensemble d'un pneumatique et d'un organe rapporté sur le pneumatique, le pneumatique et l'organe comprenant respectivement des parties de liaison complémentaires, la partie de liaison de l'organe étant plus souple que la partie de liaison du pneumatique.

Grâce à l'invention, le comportement du pneumatique lorsqu'il se déforme n'est pas perturbé par la présence de l'organe à sa surface puisque l'organe est apte à se déformer au moins autant que le pneumatique. Ainsi, l'organe ne crée pas de zone de concentration d'efforts, qui est généralement à l'origine du décollement de l'organe ou d'une dégradation de la surface du pneumatique. La tenue de l'organe sur le pneumatique est donc améliorée.

Un ensemble selon l'invention peut en outre comprendre l'une ou plusieurs des caractéristiques suivantes.

- Le module d'allongement à 10% de la partie de liaison de l'organe est au plus égal au module d'allongement à 10% de la partie de liaison du pneumatique

- Le rapport entre le module d'allongement à 10% de la partie de liaison de l'organe et le module d'allongement à 10% de la partie de liaison du pneumatique est au plus égal à 1 dans une large gamme des températures de fonctionnement du pneumatique.

- La plage de température de fonctionnement va de 0 à 80 degrés Celsius.

- La partie de liaison du pneumatique est formée par une gomme intérieure du pneumatique.

- La partie de liaison de l'organe est réalisée en gomme, la gomme étant naturelle ou synthétique.

- L'organe comprend une partie de support pour un dispositif notamment électronique.

- L'ensemble comprend une couche de matériau de liaison intercalée entre les parties de liaison, la couche étant en retrait ou affleurant le bord périphérique de la partie de liaison de l'organe. Cette couche de matériau de liaison comprend par exemple du caoutchouc naturel. Lorsque la couche de liaison est au contact de l'air, elle s'oxyde ce qui provoque des dégradations de la surface du pneumatique. En recouvrant la couche de liaison par la partie de liaison de l'organe, elle n'est pas en contact direct avec l'air. Ainsi, l'oxydation de la couche de liaison est réduite, ce qui prolonge la durée de vie de l'assemblage de l'organe au pneumatique.

- Le bord périphérique de l'organe est délimité par la ligne de jonction de surfaces opposées convergeant vers leur ligne de jonction suivant un angle compris entre 9 et 15°, de préférence entre 10° et 12°. L'angle des bordures de l'organe est un paramètre important à prendre en considération pour que la fixation de l'organe au pneumatique soit durable. En effet, si cet angle est inférieur à 9°, une ondulation des bordures apparaît, provoquant au moment de la pose un risque de replis qui apparaissent en bordure périphérique de l'organe et qu'il est difficile d'aplatir correctement. Si cet angle est supérieur à 15 degrés, le bord périphérique de l'organe est trop rigide si bien qu'il crée des contraintes trop fortes à la surface du pneumatique et provoque des cassures ou des décollements en roulage.

- L'organe comprend une masse de gomme délimitée par deux surfaces opposées sensiblement parallèles formant respectivement une surface de support et une surface de liaison avec un pneumatique, la masse comprenant une ouverture ménagée dans la surface de liaison délimitant un évidement ménagé dans la masse, la surface de support s'étendant au moins partiellement au droit de la surface de l'ouverture. En étant en contact avec la surface de liaison, le dispositif rigidifie la masse et plus particulièrement la partie de la masse qui est située au droit de la surface de liaison. Or, du fait de l'évidemment, une partie de la masse de gomme rigidifiée par le dispositif n'est pas en contact avec le pneumatique. Ainsi, le dispositif situé sur la surface de support ou la partie du dispositif située au droit de la surface de l'ouverture n'a pas d'influence mécanique directe sur le pneumatique. Il en résulte que l'évidement de l'organe de l'invention améliore le découplage mécanique entre le dispositif et le pneumatique.

L'invention sera mieux comprise à la lecture de la description qui va suivre, donnée uniquement à titre d'exemple et faite en se référant aux dessins annexés dans lesquels :

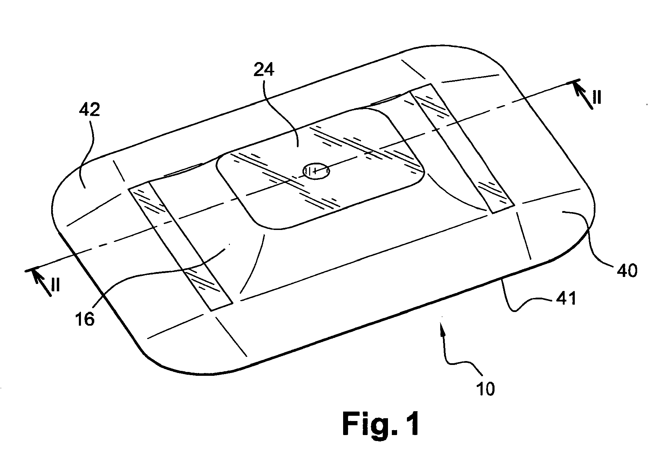

- la figure 1 est une vue en perspective d'un organe d'un ensemble selon l'invention,
- la figure 2 est une vue en coupe de l'organe de la figure 1 suivant le plan II-II de la figure 1,
- la figure 3 est une vue en coupe de l'organe de la figure 1 lorsqu'il est rapporté sur un pneumatique et qu'il supporte un dispositif ; et.

- les figures 4 à 6 sont des vues en coupe d'agrandissements de plusieurs modes de réalisation d'un bord périphérique d'un organe.

On entend par « module d'élasticité » d'une gomme ou mélange caoutchouteux, un module sécant d'extension à 10 % de déformation et à température ambiante ou spécifiée, la mesure est réalisée après un premier cycle d'accommodation jusqu'à 10 % de déformation :

-

$$E_{10} = \frac{F_{10}}{S \times \varepsilon_{10}} \quad \text{i.e.} \quad E_{10} = \frac{F_{10}(1 + \varepsilon_{10})}{S_0 \times \varepsilon_{10}} \quad \text{et}$$

$$E_{10} = \frac{F_{10} \times 1.1}{S_0 \times 0.1} \quad \text{dans laquelle } \varepsilon_{10} \text{ est égale à}$$

0.1 ;

avec $E_{10}$ : module d'extension sécant à 10% de déformation ; $F_{10}$ : force d'extension à 10% d'extension ; $S_0$ : section initiale de l'éprouvette de test ; $S$ : section de l'éprouvette de test à la déformation d'extension $\varepsilon$, dans le cas de matériau en caoutchouc, on sait que : $S = \dfrac{S_0}{1 + \varepsilon}$ ; et $\varepsilon_{10}$ : déformation d'extension à 10%.

On a représenté sur les figures un exemple d'organe selon l'invention adapté pour un véhicule de tourisme. L'organe est désigné par la référence générale 10 et est destiné à être rapporté sur un pneumatique 12 et à former un support pour un dispositif 14. Ce dispositif 14 peut être de type varié, par exemple électronique (capteur de pression, capteur de température ...), mécanique ou autre.

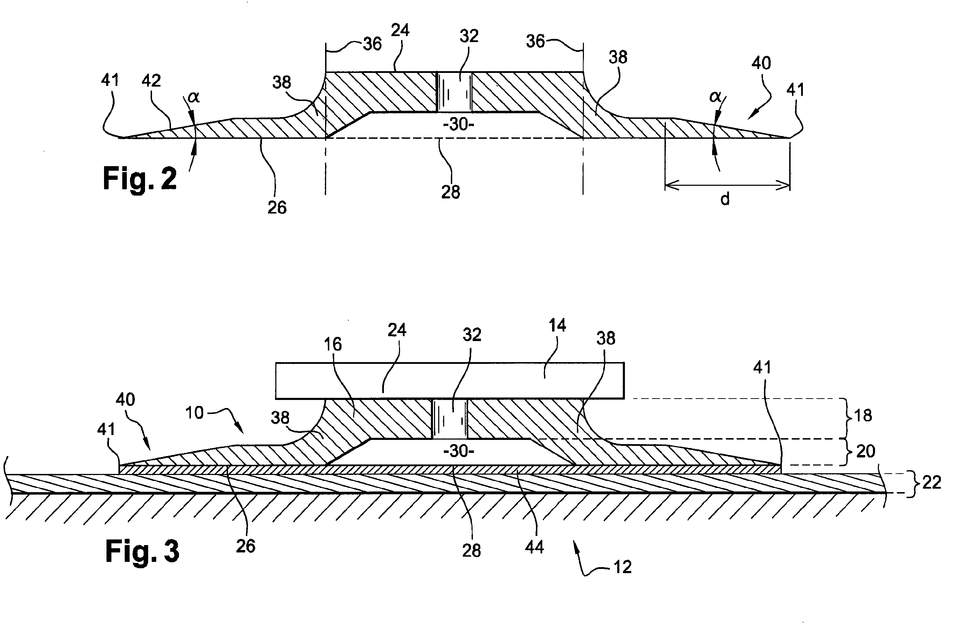

L'organe 10 comprend une masse 16 de gomme qui, comme représenté sur la figure 3, comprend une partie de support 18 de l'organe 14 et une partie de liaison 20 avec le pneumatique 12. Les parties 18 et 20 sont d'un seul tenant et leur séparation est imaginaire. La masse 16 de gomme est obtenue par moulage.

L'organe 10 est destiné à être rapporté sur une surface de préférence intérieure du pneumatique. Sur la figure 3, l'organe 10 est rapporté sur une gomme d'étanchéité intérieure 22 du pneumatique 12. La gomme intérieure 22 forme une partie de liaison complémentaire de la partie de liaison 20 de l'organe 10.

La masse de gomme 16 est délimitée par une surface de support 24 de l'organe 14, la surface 24 étant constituée par la surface supérieure de la partie de support 18. Les dimensions de la surface de support 24 sont d'environ 15 millimètres x 12 millimètres (mm). Le dispositif 14 porté par la surface de support peut avoir des dimensions supérieures à celles de la surface de support 24, comme représenté sur la figure 3.

La masse de gomme 16 est également délimitée par une surface de liaison 26 avec le pneumatique 12, opposée à la surface de support 24 et sensiblement parallèle à celle-ci. La surface de liaison 26 est constituée par la surface inférieure de la partie de liaison 20 de l'organe 10. Les dimensions de la surface de liaison 26 sont d'environ 40 mm x 32 mm.

Les deux surfaces 24 et 26 sont sensiblement planes et sont distantes l'une de l'autre d'environ 4 mm.

L'organe 10 comprend une ouverture 28 ménagée dans la surface de liaison 26 et délimitant un évidement 30 ménagé dans la masse 16. L'ouverture 28 est représentée en trait pointillé sur la figure 2. La profondeur de l'évidement 30 est d'environ 1,5 mm.

On notera que du fait de la présence de l'évidement 30 dans la masse 16, il existe au moins un plan imaginaire de section de la masse 16 sensiblement parallèle aux surfaces opposées 24 et 26 dans lequel la section de la masse 16 à une forme générale annulaire.

La masse 16 est conformée de sorte que la surface de support 24 s'étend au moins partiellement au droit de la surface de l'ouverture 28. En d'autres termes, la projection orthogonale de la surface 24 sur la surface de liaison 26 délimite la surface de l'ouverture 28.

Dans l'exemple représenté sur la figure 2, la projection orthogonale de la surface de support 24 sur la surface de liaison 26, symbolisée par des traits de projection 36, coïncide sensiblement avec l'ouverture 28.

Grâce à l'évidement 30, la partie de la masse 16 qui est située au droit de la surface de liaison 24, et qui est de ce fait rendue rigide par la présence du dispositif 14, n'est pas en contact avec la gomme intérieure 22 du pneumatique 12.

La partie de support 18 est reliée à la partie de liaison 20 par des ponts de matière 38 liés à la périphérie de la partie de support 18. Ces ponts de matière 38 ont une faible épaisseur, par exemple égale à 4 mm, de sorte qu'ils sont souples et qu'ils permettent un mouvement relatif des deux parties 18 et 20, notamment en cas de déformations du pneumatique 12 ou de vibrations du dispositif 14. Cela permet d'améliorer plus encore le découplage mécanique entre le pneumatique 12 et le dispositif 14.

La masse de gomme comprend en outre et de façon optionnelle un canal 32 ménagé dans la partie de support 18 de la masse 16 et débouchant d'un côté sur la surface de support 24 et de l'autre au fond de l'évidement 30. Ce canal permet de positionner correctement le dispositif 14 sur la surface de support 24. Il facilite également le collage de l'organe 10 sur le pneumatique en évitant l'emprisonnement d'air dans l'évidement 30. Enfin, il permet une communication fluidique entre l'évidement 30 et l'air intérieur du pneumatique en coopérant avec un canal similaire ménagé dans le dispositif. Ainsi des variations de pression ou de température du pneumatique ne provoquent pas de différences de pression entre l'intérieur du pneumatique et l'intérieur de l'évidement, sources de déformations de l'organe.

La gomme utilisée pour la fabrication de la partie de liaison 20 de la masse 16 est une gomme dont le module d'allongement à 10 % est au plus égal à celui du pneumatique 12. En d'autres termes, la partie de liaison 20 est plus souple que la gomme intérieure 22. A titre d'exemple, pour un module d'allongement à 10% de la gomme intérieure 22 du pneumatique égal à 2,2 MPa à 65°C, on choisira, pour fabriquer l'organe 10, une gomme dont le module d'allongement est au plus égal à 2,2 MPa à 65°C. Pour une bonne endurance de l'assemblage, il convient que le module de la gomme de l'organe respecte cette valeur limite dans toute la plage des températures du pneumatique en roulage, par exemple entre 0 et 80 degrés Celsius La gomme utilisée peut être naturelle ou synthétique.

La partie de liaison 20 de l'organe 10 comprend un bord périphérique 40 délimité par la ligne dé jonction 41 entre la surface de liaison 26 et une surface supérieure 42 de la partie de liaison 20. Pour des raisons de fabrication et notamment pour faciliter l'éventation lors du moulage, la ligne de jonction 41 peut ne pas être d'épaisseur nulle mais présenter une épaisseur faible, de l'ordre de 0,1 à 0,2 mm. On parle alors dans ce cas de surface de jonction 41. Les deux surfaces 26 et 42 convergent vers la ligne de jonction 41 et font entre elles, à proximité de la ligne 41, un angle α compris entre 9 et 15°, de préférence entre 10 et 12°.

Comme représenté sur la figure 3, la solidarisation de l'organe 10 sur le pneumatique 12 est réalisée au moyen d'un matériau de liaison 44, intercalée entre la surface de liaison 26 de l'organe 10 et la gomme intérieure 22. Cette couche de liaison 44 s'étend tout du long de la surface de liaison 26 mais n'en déborde pas. En d'autres termes, la couche de liaison 44 affleure le bord périphérique 41.

De préférence, l'angle α entre les deux surfaces 26 et 42 est compris entre 10 et 12 degrés dans une zone du bord périphérique 40 s'étendant jusqu'à une distance d d'environ 7 mm de la ligne de jonction 41.

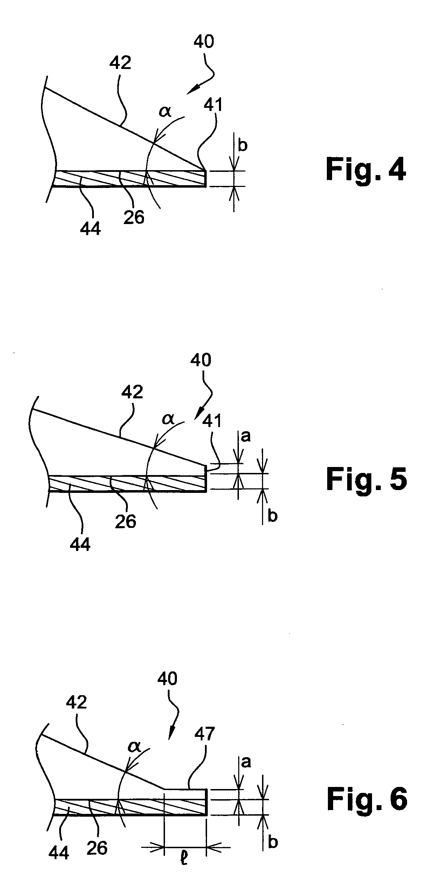

Les figures 4 à 6 présentent en coupe des agrandissements de trois modes de réalisation du bord périphérique 40.

A la figure 4, les deux surfaces 26 et 42 se rejoignent jusqu'à former une ligne de jonction 41, c'est-à-dire une surface de jonction 41 d'épaisseur nulle.

A la figure 5, le bord périphérique 40 est délimité par une surface de jonction 41 normale à la surface 26 et d'épaisseur a de l'ordre de 0,1 à 0,2 mm.

A la figure 6, le bord périphérique 40 comprend un cordon 47 de section rectangulaire et qui s'étend sur une distance I comprise entre 0 (comme sur la figure 5) et de l'ordre de 1,5 mm.

La présence de ce cordon 47 et de la surface de jonction 41 facilitent l'éventation des moules de fabrication des organes. On peut aussi utiliser des évents par exemple à d'autres endroits et conserver une géométrie telle qu'illustrée à la figure 4.

Aux figures 4 à 6 on voit aussi la couche 44 de gomme de liaison disposée contre la surface de liaison 26, d'épaisseur b de l'ordre de 0,3 mm. Cette couche de gomme de liaison se termine au bord périphérique sans dépasser du cordon ou de la surface ou de la ligne de jonction.

Enfin, l'invention ne se limite pas à l'exemple décrit ci- dessus puisqu'on peut par exemple prévoir toutes géométries pour les parties de support du dispositif, l'absence d'évidement dans la masse 16 ou une pluralité d'évidements dans la masse 16.

**Revendications**

1. Ensemble d'un pneumatique (12) et d'un organe (10) rapporté sur le pneumatique (12), dans lequel, le pneumatique (12) et l'organe (10) comprennent respectivement des parties de liaison (20, 22) complémentaires, **caractérisé en ce que** le module d'allongement à 10% de la partie de liaison (20) de l'organe (10) est au plus égal au module d'allongement à 10% de la partie de liaison (22) du pneumatique (12).

2. Ensemble selon la revendication 1, dans lequel le rapport entre le module d'allongement à 10% de la partie de liaison (20) de l'organe (10) et le module d'allongement à 10% de la partie de liaison (22) du pneumatique (12) est au plus égal à 1 dans une large gamme des températures de fonctionnement du pneumatique.

3. Ensemble selon la revendication 2, dans lequel la plage de température de fonctionnement va de 0 à 80 degrés Celsius.

4. Ensemble selon l'une quelconque des revendications précédentes, dans lequel la partie de liaison (22) du pneumatique (12) est formée par une gomme intérieure (22) du pneumatique (12).

5. Ensemble selon l'une quelconque des revendications précédentes, dans lequel la partie de liaison (20) de l'organe (10) est réalisée en gomme, notamment en gomme synthétique ou naturelle.

6. Ensemble selon l'une quelconque des revendications précédentes, dans lequel l'organe (10) comprend une partie de support (18) pour un dispositif (14) notamment électronique.

7. Ensemble selon l'une quelconque des revendications précédentes, comprenant une couche (44) de matériau de liaison intercalée entre les parties de liaison (20, 22), la couche (44) étant en retrait ou affleurant le bord périphérique (40) de la partie de liaison (20) de l'organe (10).

8. Ensemble selon la revendication précédente, dans lequel la couche (44) de matériau de liaison comprend du caoutchouc naturel.

9. Ensemble selon l'une quelconque des revendications précédentes, dans lequel le bord périphérique (40) de l'organe (10) est délimité par la ligne de jonction (41) de surfaces opposées (26, 42) convergeant vers leur ligne de jonction (41) suivant un angle (α) compris entre 9 et 15 degrés, de préférence entre 10 et 12 degrés.

10. Ensemble selon l'une quelconque des revendications précédentes, dans lequel l'organe (10) comprend une masse (16) de gomme délimitée par deux surfaces opposées (24, 26) sensiblement parallèles formant respectivement une surface de support (24) et une surface de liaison (26) avec un pneumatique (12), la masse (16) comprenant une ouverture (28) ménagée dans la surface de liaison (26) délimitant un évidement (30) ménagé dans la masse (16), la surface de support (24) s'étendant au moins partiellement au droit de la surface de l'ouverture (28).


**Patentansprüche**

1. Einheit aus einem Luftreifen (12) und einem auf dem Luftreifen (12) angebrachten Bauteil (10), wobei der Luftreifen (12) und das Bauteil (10) je komplementäre Verbindungsteile (20, 22) enthalten, **dadurch gekennzeichnet, dass** der Dehnungsmodul bei 10% des Verbindungsteils (20) des Bauteils (10) höchstens gleich dem Dehnungsmodul bei 10% des Verbindungsteils (22) des Luftreifens (12) ist.

2. Einheit nach Anspruch 1, wobei das Verhältnis zwischen dem Dehnungsmodul bei 10% des Verbindungsteils (20) des Bauteils (10) und dem Dehnungsmodul bei 10% des Verbindungsteils (22) des Luftreifens (12) in einem großen Betriebstemperaturbereich des Luftreifens höchstens gleich 1 ist.

3. Einheit nach Anspruch 2, wobei der Betriebstemperaturbereich von 0 bis 80 Grad Celsius geht.

4. Einheit nach einem der vorhergehenden Ansprüche, wobei der Verbindungsteil (22) des Luftreifens (12) von einem inneren Gummi (22) des Luftreifens (12) geformt wird.

5. Einheit nach einem der vorhergehenden Ansprüche, wobei der Verbindungsteil (20) des Bauteils (10) aus Gummi, insbesondere aus synthetischem oder natürlichem Gummi, hergestellt ist.

6. Einheit nach einem der vorhergehenden Ansprüche, wobei das Bauteil (10) einen Trägerteil (18) für eine insbesondere elektronische Vorrichtung (14) enthält.

7. Einheit nach einem der vorhergehenden Ansprüche, die eine Schicht (44) von Verbindungsmaterial enthält, die zwischen die Verbindungsteile (20, 22) eingeschoben ist, wobei die Schicht (44) rückversetzt ist oder den Umfangsrand (40) des Verbindungsteils (20) des Bauteils (10) berührt.

8. Einheit nach dem vorhergehenden Anspruch, wobei die Schicht (44) von Verbindungsmaterial natürlichen Kautschuk enthält.

9. Einheit nach einem der vorhergehenden Ansprüche, wobei der Umfangsrand (40) des Bauteils (10) von der Anschlusslinie (41) gegenüberliegender Flächen (26, 42) begrenzt wird, die zu ihrer Anschlusslinie (41) gemäß einem Winkel (α) konvergieren, der zwischen 9 und 15 Grad, vorzugsweise zwischen 10 und 12 Grad liegt.

10. Einheit nach einem der vorhergehenden Ansprüche, wobei das Bauteil (10) eine Gummimasse (16) enthält, die von zwei im Wesentlichen parallelen gegenüberliegenden Flächen (24, 26) begrenzt wird, welche eine Tragfläche (24) bzw. eine Verbindungsfläche (26) mit einem Luftreifen (12) formen, wobei die Masse (16) eine in der Verbindungsfläche (26) eingerichtete Öffnung (28) enthält, die eine in der Masse (16) eingerichtete Aussparung (30) begrenzt, wobei die Tragfläche (24) sich zumindest teilweise vor der Fläche der Öffnung (28) erstreckt.


**Claims**

1. Assembly of a tyre (12) and of a member (10) fitted to the tyre (12), in which the tyre (12) and the member (10) comprise respectively complementary connecting portions (20, 22), **characterized in that** the extension modulus at 10% of the connecting portion (20) of the member (10) is at most equal to the extension modulus at 10% of the connecting portion (22) of the tyre (12).

2. Assembly according to Claim 1, in which the ratio between the extension modulus at 10% of the connecting portion (20) of the member (10) and the extension modulus at 10% of the connecting portion (22) of the tyre (12) is at most equal to 1 in a wide range of operating temperatures of the tyre.

3. Assembly according to Claim 2, in which the operating temperature range goes from 0 to 80 degrees Celsius.

4. Assembly according to any one of the preceding claims, in which the connecting portion (22) of the tyre (12) is formed by an inner gum (22) of the tyre (12).

5. Assembly according to any one of the preceding claims, in which the connecting portion (20) of the member (10) is made of gum, notably of synthetic or natural gum.

6. Assembly according to any one of the preceding claims, in which the member (10) comprises a supporting portion (18) for a device (14) which is notably electronic.

7. Assembly according to any one of the preceding claims, comprising a layer (44) of connecting material inserted between the connecting portions (20, 22), the layer (44) being set back from or flush with the peripheral edge (40) of the connecting portion (20) of the member (10).

8. Assembly according to the preceding claim, in which the layer (44) of connecting material comprises natural rubber.

9. Assembly according to any one of the preceding claims, in which the peripheral edge (40) of the member (10) is delimited by the joining lines (41) of opposite surfaces (26, 42) converging on their joining line (41) at an angle ($\alpha$) of between 9 and 15 degrees, preferably between 10 and 12 degrees.

10. Assembly according to any one of the preceding claims, in which the member (10) comprises a mass (16) of gum delimited by two opposite surfaces (24, 26) that are substantially parallel respectively forming a supporting surface (24) and a connecting surface (26) with a tyre (12), the mass (16) comprising an opening (28) arranged in the connecting surface (26) delimiting a recess (30) arranged in the mass (16), the supporting surface (24) extending at least partially in line with the surface of the opening (28).

**Fig. 1**

Fig. 2

Fig. 3

Fig. 4

Fig. 5

Fig. 6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1544001 A1